# EUROPÄISCHE PATENTANMELDUNG

(11) **EP 1 995 842 A1**
(43) Veröffentlichungstag der Anmeldung: **26.11.2008**
(21) Anmeldenummer: 07108819.9
(22) Anmeldetag: 24.05.2007
(51) Int. Cl.: H02H 3/14

(54) **Sicherheitsabschaltvorrichtung für elektrische Verbraucher**

(71) Anmelder: Hamed, Abdulrahman, 54000 Nancy (FR)
(72) Erfinder: Hamed, Abdulrahman, 54000 Nancy (FR)
(74) Vertreter: Hilleringmann, Jochen

(57) **Zusammenfassung**

Die Sicherheitsabschaltvorrichtung für elektrische Verbraucher ist versehen mit Spannungsversorgungspotentialanschlüssen (24), an die eine Versorgungsspannung (28) für den elektrischen Verbraucher (10) anlegbar ist, einem Sensflranschluss (26), mit dem eine von außen zugängliche elektrisch leitende Fläche (16) des elektrischen Verbrauchers (10) verbindbar ist, einem Stromdetektor (34) zur Erkennung eines über den Sensoranschluss (26) fließenden elektrischen Stroms mit einem maximal zulässigen Wert und einer Abschalteinheit (32) zum Unterbrechen der an die Spannungsversorgungspotentialanschlüsse (24) anlegbaren Versorgungsspannung (28), wenn der Stromdetektor (34) einen Strom detektiert, der größer ist als der maximal zulässige Wert.

## Beschreibung

Die Erfindung betrifft eine Sicherheitsabschaltvorrichtung für elektrische Verbraucher, die einen Leckagestrom, der über von außen zugängliche elektrisch leitende Flächen des elektrischen Verbrauchers fließt, erkennt und in einem solchen Fall die Versorgungsspannung für den elektrischen Verbraucher abschaltet.

Sicherheitsabschaltvorrichtungen für elektrische Verbraucher bzw. elektrische Netze sind beispielsweise in Form von FI-Schaltern bekannt, Derartige Schalter sind konstruktiv recht aufwendig und führen zu einer Abschaltung des gesamten Netzes, Dagegen existieren keine Vorschläge im Stand der Technik, um einen an ein elektrisches Netz (beispielsweise Hausnetz) angeschlossenen elektrischen Verbraucher zu schützen, ohne dabei zugleich das gesamte Netz abzuschalten.

Aufgabe der Erfindung ist es daher, eine Sicherheitsabschaltvorrichtung für elektrische Verbraucher zu schaffen, wie sie beispielsweise an eine Steckdose eines Gebäudenetzes angeschlossen ist.

Zur Lösung dieser Aufgabe wird mit der Erfindung eine Sicherheitsabschaltvorrichtung für elektrische Verbraucher geschaffen, die versehen ist mit
- Spannungsversorgungspotentialanschlüssen, an die eine Versorgungsspannung für den elektrischen Verbraucher anlegbar ist,
- einem Sensoranschluss, mit dem eine von außen zugängliche elektrisch leitende Fläche des elektrischen Verbrauchers verbindbar ist,
- einem Stromdetektor zur Erkennung eines über den Sensoranschluss fließenden elektrischen Stroms mit einem maximal zulässigen Wert und
- einer Abschalteinheit zum Unterbrechen der an die Spannungsversorgungspotentialanschlüsse anlegbaren Versorgungsspannung, wenn der Stromdetektor einen Strom detektiert, der größer ist als der maximal zulässige Wert.

Bei der erfindungsgemäßen Vorrichtung handelt es sich um eine insbesondere zwischen die Versorgungsspannung und den Verbraucher zusätzlich schaltbare Einheit, die elektrisch mit einer von außen zugänglichen elektrisch leitenden Fläche des elektrischen Verbrauchers (beispielsweise Gehäuse des Verbrauchers wie z.B. Motorgehäuse) verbunden ist. Hierzu weist die erfindungsgemäße Sicherheitsabschaltvorrichtung einen Sensoranschluss auf. Mit diesem Sensoranschluss kann beispielsweise der Schutzleiter bzw. die Masse des elektrischen Verbrauchers verbunden sein. Fließt nun über den Sensoranschluss ein Strom der eine Größe aufweist, die über einem maximal zulässigen Wert liegt, so wird dieser Strom mit Hilfe eines Stromdetektors erkannt und führt zur Zwangsabschaltung der Versorgungsspannung. Hierzu dient eine Abschalteinheit, die vorzugsweise sämtliche Spannungsversorgungspotentialanschlüsse für den elektrischen Verbraucher unterbricht (mehrpolige Abschaltung).

Mit der erfindungsgemäßen Vorrichtung ist es beispielsweise möglich, elektrische Verbraucher abzuschalten, wenn elektrisch leitende Flächen des elektrischen Verbrauchers von einer Person berührt werden. Wird nämlich der Sensoranschluss mit einer elektrischen Ladung beaufschlagt, so befindet sich diese Ladung auch auf der elektrisch leitenden Fläche des elektrischen Verbrauchers. Wird diese Fläche nun von einer Person berührt, so kommt es zu einem Minimalstromfluss, der mit Hilfe des Stromdetektors erkannt wird und zur Zwangsabschaltung der Versorgungsspannung führt.

Umgekehrt kann die erfindungsgemäße Vorrichtung auch dem Schutz des elektrischen Verbrauchers dienen. Fließt beispielsweise ein Leckagestrom über den Schutzleiter bzw. die Masse des elektrischen Verbrauchers ab, so wird dieser Leckagestrom ebenfalls durch den Stromdetektor erkannt, was auch hier zur Zwangsabschaltung der Versorgungsspannung führt.

Die erfindungsgemäße Vorrichtung kann auf denkbar einfache Weise an beispielsweise eine Steckdose eines Hausstromnetzes angeschlossen werden. Mit der Sicherheitsabschaltvorrichtung ist dann umgekehrt der zu schützende elektrische Verbraucher verbunden. Alternativ ist es auch möglich, die Sicherheitsabschaltvorrichtung in eine Steckdose zu integrieren, so dass die Massekontakte der Steckdose als Sensoranschluss für die Sicherheitsabschaltvorrichtung genutzt werden können.

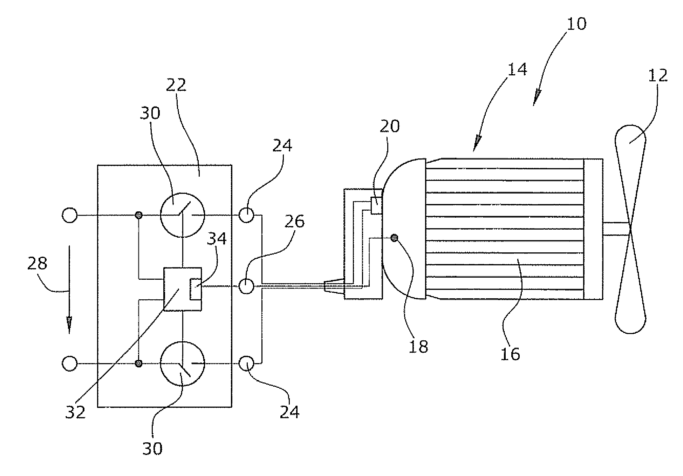

Die Erfindung wird nachfolgend anhand der Zeichnung näher erläutert.

In der Zeichnung ist ein elektrischer Verbraucher in Form eines Ventilators 10 gezeigt, der ein Belüftungsrad 12 und einen elektrischen Motor 14 aufweist. Das Gehäuse des Motors 14 ist elektrisch leitend und weist einen Anschluss 18 auf. Ferner weist der Motor einen Versorgungsspannungsanschluss 20 auf.

Dem elektrischen Verbraucher 10 vorgeschaltet ist eine Sicherheitsabschaltvorrichtung 22 mit Spannungsversorgungspotentialanschlüssen 24 und einem Sensoranschluss 26. Die Spannungsversorgungspotentialanschlüsse 24 sind elektrisch mit dem Versorgungsspannungsanschluss 20 des Motors 14 verbunden, während der Sensoranschluss 26 elektrisch mit dem Masseanschluss 18 am Gehäuse 16 des Motors 14 verbunden ist.

Die Sicherheitsabschaltvorrichtung 22 ist ihrerseits mit der Netzversorgungsspannung 28 verbunden und weist zwei steuerbare EIN/AUS-Schalter 30 auf, die von einer Abschalteinheit 32 zwangsweise ausschaltbar sind. Die Abschalteinheit 32 ist mit einem Stromdetektor 34 gekoppelt, der einen möglicherweise über den Sensoranschluss 26 fließenden Strom mit einer Größe, die größer als ein maximal zulässiger Wert ist, detektiert. Bei dem maximal zulässigen Wert kann es sich auch um 0 Ampere handeln. Im Falle der Ermittlung eines fälschlicherweise über das Gehäuse 16 des Motors 14 fließenden Leckagestroms kommt es zur Detektion dieses über den Sensoranschluss 26 in die Sicherheitsabschaltvorrichtung 22 fließenden Stroms, woraufhin die Abschalteinheit 32 die beiden Schalter 30 ausschaltet, so dass die Spannungsversorgungspotentialanschlüsse 24 von der Netzversorgungsspannung 28 entkoppelt sind.

Umgekehrt ist es möglich, auch die Berührung des Gehäuses 16 des Motors 14 durch eine Person zu detektieren, um dann die Zwangsabschaltung vorzunehmen. Hierzu kann das Gehäuse 16 des Motors 14 über den Sensoranschluss 26 mit einer elektrischen Ladung beaufschlagt werden. Sobald das Gehäuse 16 von einer Person berührt wird, kommt es zu einem kleinem elektrischen Stromfluss, der durch den Stromdetektor 34 detektiert wird, um dann über die Abschalteinheit 32 die Zwangsabschaltung vorzunehmen.

## Patentansprüche

1. Sicherheitsabschaltvorrichtung für elektrische Verbraucher mit
- Spannungsversorgungspotentialanschlüssen (24), an die eine Versorgungsspannung (28) für den elektrischen Verbraucher (10) anlegbar ist,
- einem Sensoranschluss (26), mit dem eine von außen zugängliche elektrisch leitende Fläche (16) des elektrischen Verbrauchers (10) verbindbar ist,
- einem Stromdetektor (34) zur Erkennung eines über den Sensoranschluss (26) fließenden elektrischen Stroms mit einem maximal zulässigen Wert und
- einer Abschalteinheit (32) zum Unterbrechen der an die Spannungsversorgungspotentialanschlüsse (24) anlegbaren Versorgungsspannung (28), wenn der Stromdetektor (34) einen Strom detektiert, der größer ist als der maximal zulässige Wert.

2. Sicherheitsabschaltvorrichtung nach Anspruch 1, **dadurch gekennzeichnet, dass** die Versorgungsspannung (28) abschaltbar ist, wenn über den Sensoranschluss (26) ein Leckagestrom mit einer über dem maximal zulässigen Wert liegenden Größe fließt.

3. Sicherheitsabschaltvorrichtung nach Anspruch 1 oder 2, **dadurch gekennzeichnet, dass** der Sensoranschluss (26) mit einer elektrischen Ladung beaufschlagbar ist, wobei über den Sensoranschluss (26) ein Strom mit einer über dem maximalen zulässigen Wert liegenden Größe fließt, wenn die außen zugängliche elektrisch leitende Fläche (16) des Verbrauchers (10) von einer Person berührt wird.
